(19) Europäisches Patentamt
European Patent Office
Office européen des brevets

(11) **EP 1 093 267 B1**

(12) **FASCICULE DE BREVET EUROPEEN**

(45) Date de publication et mention
de la délivrance du brevet:
**17.08.2005 Bulletin 2005/33**

(51) Int Cl.⁷: **H04L 27/233**, H04L 7/033

(21) Numéro de dépôt: **00203458.5**

(22) Date de dépôt: **04.10.2000**

(54) **Correction en fréquence à la réception dans un système de transmission par paquets**

Frequenzkorrektur beim Empfang in einem Paketübertragungssystem

Frequency correction at reception in a packet transmission system

(84) Etats contractants désignés:
**DE ES FR GB IT**

(30) Priorité: **13.10.1999 FR 9912781**

(43) Date de publication de la demande:
**18.04.2001 Bulletin 2001/16**

(73) Titulaire: **Koninklijke Philips Electronics N.V.**
**5621 BA Eindhoven (NL)**

(72) Inventeurs:
• **Chouly, Antoine**
**75008 Paris (FR)**
• **Brajal, Américo**
**75008 Paris (FR)**
• **Legrand, Delphine**
**75008 Paris (FR)**

(74) Mandataire: **Charpail, François et al**
**Société Civile S.P.I.D.**
**156, Boulevard Haussmann**
**75008 Paris (FR)**

(56) Documents cités:
**US-A- 5 019 824          US-A- 5 272 446**
**US-A- 5 282 228**

**Description**

L'invention concerne un système de transmission par paquets comportant au moins un terminal et une station de tête, la station de tête comportant des moyens de réception pour recevoir des paquets de données transmis par ledit terminal avec une erreur en fréquence $\Delta f$ et des moyens d'estimation d'erreur pour calculer, à partir des données reçues, une fonction d'erreur discrète $Z(\Delta f)$ et pour en déduire une estimation $\hat{\Delta f}$ de l'erreur en fréquence correspondant à un maximum de la fonction d'erreur $Z(\Delta f)$ pour une précision donnée Acc.

L'invention concerne également un récepteur pour système de transmission par paquets destiné à recevoir des paquets de données transmis par un terminal avec une erreur en fréquence $\Delta f$ et comportant des moyens d'estimation d'erreur pour calculer, à partir des données reçues, une fonction d'erreur discrète $Z(\Delta f)$ et pour en déduire une estimation $\hat{\Delta f}$ de l'erreur en fréquence correspondant à un maximum de la fonction d'erreur $Z(\Delta f)$ pour une précision donnée (Acc).

Elle concerne enfin un procédé de correction en fréquence à la réception, pour système de transmission par paquets comportant :

- une étape de réception de paquets de données en provenance d'au moins un terminal dudit système,
- une étape d'estimation d'erreur pour calculer, à partir des données reçues, une fonction d'erreur discrète $Z(\Delta f)$ et pour en déduire une estimation d'erreur en fréquence $(\hat{\Delta f})$ relative aux données reçues et correspondant à un maximum de la fonction d'erreur $Z(\Delta f)$ pour une précision donnée (Acc).

L'invention a d'importantes applications, notamment dans le domaine des transmissions par satellite ou par câble avec voies de retour, dans lesquelles une pluralité de terminaux sont susceptibles de transmettre des paquets de données vers une station de tête selon un mécanisme de répartition des ressources en temps et en fréquence. De telles transmissions des terminaux vers la station de tête sont appelées transmissions montantes.

Ces terminaux sont en général destinés au grand public. Il est donc important de réduire leur prix de revient. Pour cela, il est avantageux d'utiliser des oscillateurs locaux de faible coût, donc relativement imprécis, pour générer les fréquences porteuses à utiliser dans les transmissions montantes. Typiquement, les oscillateurs utilisés ont une précision variant entre 1 ppm (de l'anglais "part per million") et 10 ppm. L'erreur qui en résulte sur la fréquence porteuse générée étant proportionnelle à la fréquence porteuse, elle est d'autant plus grande que les fréquences utilisées sont élevées. A titre d'exemple, dans les systèmes de transmission par satellite qui utilisent pour les transmissions montantes la bande de fréquences Ka (20Ghz - 30Ghz), l'écart ou l'erreur en fréquence observé pour un oscillateur local ayant une précision de 1 ppm peut atteindre ±30kHz (c'est-à-dire que pour une fréquence symbole de 100kHz, l'écart de fréquence normalisé par rapport à la fréquence symbole est de ±30%).

L'article "Frequency estimator with dichotomous search of periodogram peak" de Y.V. Zakharov et T.C. Tozer publié dans la revue Electronics letters, volume 35, n°19, le 16 Septembre 1999 décrit un estimateur de fréquence basé sur un algorithme portant le nom de ses auteurs Rife et Boorstyn pour estimer une erreur en fréquence située dans une plage de fréquence normalisée par rapport à la fréquence symbole $\Delta f/B$ de ±1/2 (où $\Delta f$ est l'erreur en fréquence et B est la fréquence symbole). Dans la suite de la description, l'estimation de l'écart de fréquence normalisé $\Delta f/B$ ou encore $\Delta f \times T_s$ (où $T_s$ est la durée du symbole) que l'on cherche à déterminer sera noté $\hat{\Delta f}$. Les données reçues sont modulées selon une modulation de type PSK (de l'anglais Phase Shift Keying) pour former des symboles.

Les estimateurs sont caractérisés par différents paramètres, notamment par la précision de l'estimation obtenue notée Acc, la largeur de la plage d'acquisition de l'écart en fréquence notée $\pm\Delta f_{max}$, le niveau minimum du rapport signal à bruit du signal traité, la complexité de l'algorithme. Certains de ces paramètres ont des évolutions opposées. En particulier la précision de l'estimation est d'autant plus faible que la plage d'acquisition est large; et les estimateurs sont d'autant plus complexes qu'ils sont capables de fonctionner avec des rapports signal à bruit plus faibles. Rife et Boorstyn ont montré que l'erreur en fréquence $\Delta f$ a une probabilité maximum de se situer à l'endroit du maximum d'amplitude de la fonction suivante, notée $Z(\Delta f)$:

$$Z(\hat{\Delta f}) = \frac{1}{L}\sum_{k=0}^{L-1} z(k) \times e^{-j2\pi k\hat{\Delta f}} \qquad (1)$$

où L est la longueur d'observation, c'est-à-dire le nombre de symboles reçus utilisés pour le calcul d'estimation d'erreur, et k représente la position du symbole dans la trame reçue, avec $z(k)=x(k) \times c_k{}^*$ si les symboles reçus sont connus, où $c_k{}^*$ est le complexe conjugué du symbole connu prédéterminé $c_k$ et où $x(k)$ est le symbole reçu avec une erreur en fréquence $\Delta f$ et s'écrit $x(k)=c_k \times e^{2\pi j.k\Delta f \times T_s+\varphi_0}$ où $\varphi_0$ est le déphasage initial entre l'oscillateur local utilisé en réception et celui utilisé à l'émission (ce déphasage est différent pour chaque paquet et correspond au déphasage pour k=0)

et avec z(k)= $e^{jM \arg|x(k)|}$ si les symboles reçus ne sont pas connus à l'avance, où M est le nombre de phases de la modulation PSK utilisée, mais dans ce cas il faudra diviser le résultat obtenu par M pour obtenir l'estimation $\Delta f$.

La technique proposée dans l'article cité préconise d'effectuer l'estimation d'erreur en deux étapes, une première étape dans laquelle on obtient une première estimation de l'erreur en calculant une transformée de Fourrier Rapide ou FFT pour un certain nombre de points sur tout l'intervalle normalisé $\pm 1/2$ et une deuxième étape dans laquelle on effectue des itérations successives du calcul d'erreur pour rechercher le maximum de la fonction d'erreur selon une méthode dichotomique en partant de trois points adjacents représentant grossièrement l'endroit du maximum. Cette technique impliquer le calcul de points sur tout l'intervalle d'acquisition de l'écart en fréquence normalisé $\pm 1/2$ pour obtenir la première estimation. Or dans le cas d'une estimation utilisant uniquement un préambule de données prédéfinies dans chaque paquet reçu pour effectuer l'estimation, appelée couramment DA (de l'anglais Data aided), le temps d'acquisition de l'erreur est très limité. Il est également préférable de limiter la puissance de calcul nécessaire au niveau de la tête de réseau en limitant le nombre de calculs. Par ailleurs, cette méthode ne permet pas d'adapter le nombre de calculs aux performances réelles des oscillateurs locaux utilisés dans les terminaux.

L'invention a notamment pour but de remédier à ces inconvénients en proposant un système, un récepteur et un procédé de correction en fréquence permettant d'améliorer la réception de paquets de données qui présentent un décalage en fréquence important tout en limitant au maximum le nombre de calculs en tenant compte des performances réelles des terminaux impliqués dans le système. Pour cela, un système de transmission et un récepteur selon l'invention et tels que décrits dans le paragraphe introductif sont caractérisés en ce que les moyens d'estimation d'erreur comportent des moyens d'itération pour effectuer une première itération du calcul de la fonction d'erreur $Z(\Delta f)$ sur $2N+1$ valeurs d'erreur comprises dans une plage fixée normalisée $\pm \Delta f_{max}$ dépendant dudit terminal, pour en déduire une première estimation de l'erreur en fréquence ($\Delta f (1)$) et des itérations successives pour des valeurs comprises entre l'estimation précédente et une valeur voisine pour laquelle la fonction d'erreur $Z(\Delta f)$ a la plus forte amplitude, jusqu'à atteindre un nombre d'itérations prédéterminé (it) lié à la précision (Acc), par la relation (2) :

$$Acc = \frac{\Delta f_{max}}{N \times 2^{it-1}} \qquad (2)$$

Les terminaux bon marché couramment utilisés dans les systèmes de transmission interactifs ont en général une erreur en fréquence comprise dans une plage d'erreur maximum notée $\pm \Delta f_0/B$ (où B est la fréquence symbole) comprise dans l'intervalle $\pm 1/2$. En calculant la fonction $Z(\Delta f)$ sur une plage d'erreur notée $\pm \Delta f_{max}/B$, avec $½ > \Delta f_{max}/B > \Delta f_0/B$, l'invention évite de calculer tous les points compris dans les intervalles $[-1/2 ; -\Delta f_{max}/B]$ et $[\Delta f_{max}/B; 1/2]$ qui sont éloignés de l'erreur réelle. L'invention préconise donc d'effectuer une première itération de la fonction $Z(\Delta f)$ sur $2N+1$ points compris dans la plage $\pm \Delta f_{max}/B$, où N est un entier choisi de sorte que $\Delta f_{max}/N$ soit du même ordre de grandeur que la précision obtenue avec l'algorithme de Rife et Boorstyn. Cette première itération fournit une première estimation $\Delta f (1)$ de l'erreur en fréquence recherchée. Des itérations successives sont ensuite effectuées en calculant un seul point supplémentaire à chaque itération, pour une nouvelle valeur d'erreur comprise entre l'estimation courante précédemment calculée $\Delta f (i)$ où i est un indice d'itération strictement positif et celle des deux valeurs voisines déjà calculées pour laquelle la fonction $Z(\Delta f)$ a la plus forte amplitude. Le résultat est ensuite comparé à l'estimation courante $\Delta f (i)$ pour en déduire une nouvelle estimation égale au maximum entre l'estimation courante $\Delta f (i)$ et le nouveau résultat. Le calcul est ainsi réitéré jusqu'à atteindre le nombre d'itérations it prédéterminé selon l'équation (2).

Selon une caractéristique de l'invention, pour chaque nouveau paquet reçu en provenance d'un terminal donné, la plage $\pm \Delta f_{max}$ est fixée en fonction de l'estimation d'erreur $\Delta f$ obtenue pour les paquets précédents. Cette mesure permet de réduire ou d'augmenter l'intervalle de recherche de l'erreur en fréquence en fonction des performances réelles de l'oscillateur local utilisé dans chaque terminal.

De même, un procédé selon l'invention de correction en fréquence à la réception est caractérisé en ce que l'étape d'estimation d'erreur comporte les sous étapes suivantes :

- une première itération $it_1$ de la fonction d'erreur $\hat{Z}(\Delta f)$ sur $2N+1$ valeurs comprises dans une plage fixée $\pm \Delta f_{max}$ dépendante dudit terminal pour en déduire une première estimation $\Delta f (1)$ de l'erreur en fréquence,
- des itérations successives ($it_{i+1}$ avec i, indice d'itération strictement positif) pour des valeurs comprises entre l'estimation courante ($\Delta f (i)$) et une valeur voisine pour laquelle la fonction d'erreur $Z(\Delta f)$ a la plus forte amplitude,
- une étape de comparaison pour comparer le résultat de chaque itération ($it_{i+1}$) à l'estimation courante ($\Delta f(i)$) et pour en déduire une nouvelle estimation ($\Delta f(i+1)$),

jusqu'à atteindre un nombre d'itérations prédéterminé (it) lié à la précision (Acc), par la relation (2).

Selon un mode de réalisation préférentiel de l'invention, convenant aux systèmes dits DA, dans lesquels les paquets de données transmis comportent un préambule de données connues ($c_k$), le système et le récepteur sont caractérisés en ce que les moyens d'estimation d'erreur comportent des moyens d'extraction des données du préambule et en ce que la fonction d'erreur Z(Δf) est calculée à partir de ces données extraites du préambule. L'utilisation des symboles connus du préambule pour estimer l'erreur en fréquence à la réception est particulièrement avantageuse car elle rend le calcul de la fonction d'erreur Z(Δf) indépendant du type de modulation utilisée. En effet, la phase des symboles reçus $x(k)=c_k \times e^{2\pi j.k\Delta f}+\varphi_0$ de module $|c_k|$ contenus dans le préambule contient une information sur l'erreur réelle Δf. En multipliant le symbole du préambule reçu x(k) par le complexe conjugué du symbole connu correspondant $c_k^*$, on obtient l'information de phase contenant l'information d'erreur en fréquence recherchée.

L'invention sera mieux comprise et d'autres détails apparaîtront dans la description qui va suivre en regard des dessins annexés qui sont donnés à titre d'exemples non limitatifs et dans lesquels:

- la figure **1** représente un exemple de système de transmission selon l'invention,
- la figure **2** représente un schéma d'un exemple de récepteur selon l'invention,
- la figure **3** représente un exemple de procédé selon l'invention.

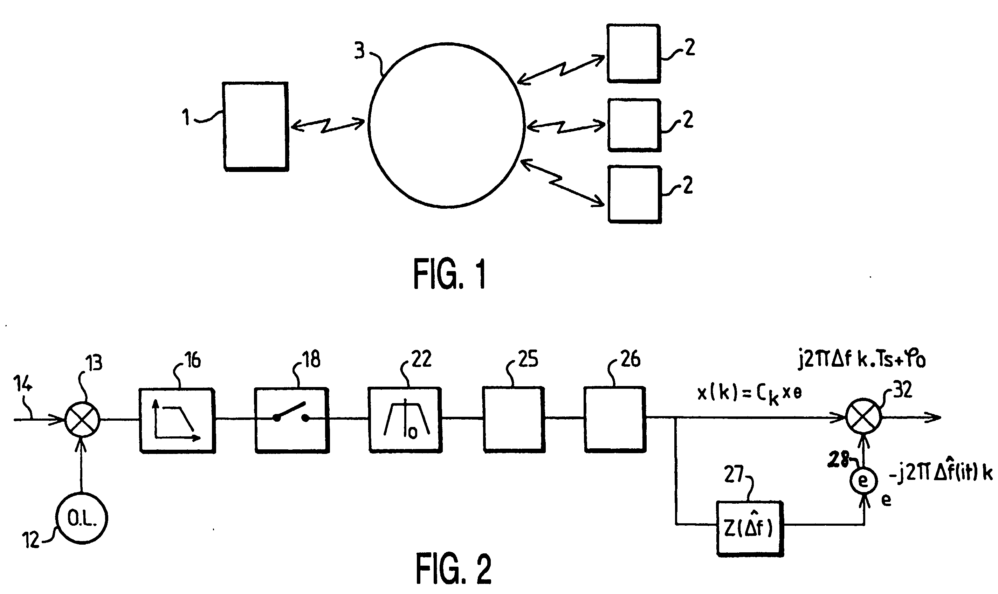

Un système de transmission selon l'invention est représenté à titre d'exemple sur la figure 1. Il comporte une station de tête 1 et une pluralité de terminaux interactifs 2 susceptibles de transmettre des données vers la station de tête en accédant à un média de transmission 3. De telles transmissions des terminaux vers la station de tête sont qualifiées de transmissions montantes. Dans les transmissions montantes, la station de tête 1 a la fonction d'un récepteur. L'accès des terminaux au média de transmission se fait par exemple en utilisant un mécanisme d'accès multiple à répartition en fréquence (Frequency Division Multiple Access en anglais) combiné avec une répartition temporelle (Time Division Multiple Access en anglais). Le média de transmission peut être de différentes natures. Par exemple, il peut s'agir d'une transmission par câble, par voie hertzienne, ou par satellite...

Dans un système d'accès à répartition fréquentielle, une fréquence porteuse est attribuée à chaque terminal pour transmettre des données vers la station de tête. Les terminaux étant équipés d'oscillateurs locaux imprécis, la fréquence porteuse effectivement utilisée par un terminal présente une erreur qui peut être relativement importante avec la fréquence porteuse qui aurait dû être utilisée en théorie.

Lorsque la répartition fréquentielle est combinée à une répartition temporelle, des terminaux différents peuvent transmettre des données dans des intervalles de temps consécutifs en utilisant des fréquences porteuses différentes, avec des erreurs en fréquence différentes par rapport aux fréquences théoriques qui auraient dues être utilisées. La station de tête dispose donc de peu de temps pour effectuer les traitements relatifs à la fréquence porteuse des signaux reçus.

L'invention présente notamment l'avantage de permettre d'estimer et de corriger très rapidement l'écart en fréquence entre le signal reçu et la porteuse théorique. En particulier cette estimation et cette correction peuvent se faire pour chaque nouveau paquet reçu en provenance de l'un quelconque des terminaux du système. Dans le cas d'une estimation de type DA fonctionnant dans les systèmes de transmission où chaque paquet comprend un préambule de données connues servant à réaliser toute une série de tests, l'invention n'utilise que les données du préambule dont la séquence est connue. L'inconvénient de ce type d'estimation DA est que la longueur du préambule doit être limitée pour ne pas perdre trop de capacité dans la bande passante ce qui implique que le temps d'acquisition de l'erreur doit être réduit au maximum. L'avantage des systèmes DA est de permettre l'utilisation d'un algorithme simplifié basé sur une comparaison des symboles reçus avec des symboles de référence connus. Les symboles reçus contiennent en effet une information de phase sur l'erreur qu'il est facile de récupérer en multipliant le symbole reçu avec le complexe conjugué du symbole connu et en divisant le produit obtenu par le module au carré du symbole connu. Dans ce cas, le type de modulation utilisée n'intervient pas. En revanche, pour les systèmes NDA (de l'anglais non data aided), où tous les symboles transmis ne sont pas connus a priori, l'invention préconise l'utilisation d'une modulation de type MPSK dont la phase des symboles transmis est connue à 2 pi/M près.

Sur la figure 2 est représenté un schéma général d'un récepteur 10 selon l'invention. Il comporte un oscillateur local 12 et un mélangeur 13 pour transposer le signal reçu 14 de telle sorte que le spectre du signal transposé soit centré sur zéro plus ou moins l'erreur en fréquence Δf. Le signal transposé est filtré par un filtre de réjection 16 pour éliminer les fréquences images autour de 2Fp où Fp est la fréquence d'émission c'est-à-dire la fréquence porteuse théorique du signal reçu. Le signal obtenu en sortie du filtre 16 est échantillonné par un dispositif de sur-échantillonnage 18 qui prélève N échantillons pour chaque symbole du signal transposé. Les échantillons prélevés sont ensuite filtrés par un filtre 22, dit filtre optimal, adapté au filtre utilisé pour l'émission. Il s'agit d'un passe-bas de type racine de Nyquist centré autour de zéro. Des moyens de recherche de l'instant d'échantillonnage optimal 25 sélectionnent un échantillon sur N échantillons disponibles en sortie du filtre passe-bas 22. Les échantillons délivrés par les moyens de recherche 25 sont stockés dans une mémoire 26 pour être transmis ensuite à des moyens d'estimation d'erreur en fréquence 27 d'une part et à des moyens de correction 32 d'autre part. Dans cet exemple, il est supposé que la synchronisation temporelle de chaque paquet reçu est réalisée avant de procéder à l'estimation d'erreur. Les moyens d'estimation 27 estiment l'erreur en fréquence Δf relative au signal stocké dans la mémoire 26. Pour cela, ils calculent la fonction

d'erreur $Z(\hat{\Delta f})$ selon l'équation (1) définie ci-après et utilisée dans l'algorithme de Rife et Boorstyn tel que décrit notamment dans l'article de Michele Morelli et Umberto Mengali :

$$Z(\hat{\Delta f}) = \frac{1}{L} \sum_{k=0}^{L-1} z(k) \times e^{-j2\pi k \Delta \hat{f}} \qquad (1)$$

où L est la longueur d'observation, c'est-à-dire le nombre de symboles reçus utilisés pour le calcul d'estimation d'erreur, et k représente la position du symbole dans la trame reçue, avec $z(k)=x(k) \times c_k^*$ si les symboles reçus sont connus (systèmes DA), où $c_k^*$ est le complexe conjugué du symbole connu prédéterminé $c_k$ et où $x(k)$ est le symbole reçu avec une erreur en fréquence $\Delta f$ et s'écrit $x(k)=c_k \times e^{2\pi j.k\Delta f \times Ts + \varphi_0}$ où $\varphi_0$ est le déphasage initial entre l'oscillateur local utilisé en réception et celui utilisé à l'émission (ce déphasage est différent pour chaque paquet et correspond au déphasage pour k=0)

et avec $z(k)= e^{jM \arg|x(k)|}$ si les symboles reçus ne sont pas connus à l'avance (systèmes NDA) où M est le nombre de niveaux de modulation, mais dans ce cas il faudra diviser le résultat obtenu par M pour obtenir l'estimation $\Delta f$.

Selon l'algorithme de Rife et Boorstyn, la fonction $Z(\Delta f)$ est calculée pour un grand nombre de points compris dans la plage d'acquisition normalisée $\pm 1/2$ correspondant à la précision recherchée Acc, ce qui revient à faire le calcul pour m points (où m est un entier) compris dans l'intervalle $\pm 1/2$ pour obtenir une précision égale à 1/m-1. Des calculs d'interpolation peuvent ensuite être effectués pour améliorer la précision finale du résultat. Par exemple, pour obtenir une estimation $\Delta f$ avec une précision de $5 \times 10^{-4}$ en utilisant uniquement une transformée de Fourier rapide pour calculer la fonction $Z(\Delta f)$, le calcul doit être effectué pour 2048 points, 2048 étant la puissance de 2 la plus proche.

La plupart des terminaux utilisés dans les systèmes de transmission interactifs ont une erreur en fréquence en général comprise dans une plage normalisée notée $\pm \Delta f_0$. L'invention préconise donc de calculer une première itération de la fonction $Z(\Delta f)$ sur 2N+1 points (avec 2N+1 très inférieur à m) compris dans un intervalle normalisé noté $\pm \Delta f_{max}$ par exemple égal à 1,5%, avec $\frac{1}{2} > \Delta f_0/B > \Delta f_{max}/B$ où N est un entier choisi de sorte que $\Delta f_{max}/N$ soit à peu près égal à $\pm 1/256$, 256 étant le nombre de points calculés sur l'intervalle normalisé $\pm 1/2$ pour effectuer une première itération de l'algorithme de Rife et Boorstyn. Cette première itération fournit une première estimation $\hat{\Delta f}$ (1) de l'erreur en fréquence recherchée en ne calculant que 2N+1 points sur l'intervalle normalisé $\pm \Delta f_{max}$. Des itérations successives sont ensuite effectuées en calculant un point supplémentaire à chaque nouvelle itération, pour une nouvelle valeur d'erreur comprise entre l'estimation courante précédemment calculée $\hat{\Delta f}$ (i) avec i>0 et celle des deux valeurs voisines déjà calculées pour laquelle la fonction $Z(\Delta f)$ a la plus forte amplitude. De préférence, le point supplémentaire calculé est le point milieu entre l'estimation courante $\hat{\Delta f}$ (i) et la valeur voisine pour laquelle la fonction $Z(\Delta f)$ a la plus forte amplitude. Le nouveau résultat obtenu pour le point supplémentaire calculé est ensuite comparé à l'estimation courante $\hat{\Delta f}$ (i) pour en déduire une nouvelle estimation égale au maximum entre l'estimation courante $\hat{\Delta f}$ (i) et ce nouveau résultat. A chaque nouvelle itération, la précision du résultat est augmentée d'un facteur 2. Le calcul est ainsi réitéré jusqu'à atteindre un nombre d'itérations it prédéterminé lié à la précision Acc par la formule :

$$Acc = \frac{\Delta f_{max}}{N \times 2^{it-1}}$$

Au bout du nombre d'itérations it prédéterminé, l'estimation d'erreur $\Delta f(it)$ est obtenue avec la précision Acc recherchée.

A titre d'exemple, en considérant une erreur comprise dans la plage $\pm \Delta f_0 = \pm 10^{-2}$, l'invention préconise d'effectuer une première itération du calcul de $Z(\Delta f)$ pour 5 fréquences (N=2) dans la plage $\pm 1.5 \times 10^{-2} (\pm \Delta f_{max} = \pm 1.5 \times 10^{-2})$ et d'effectuer 4 itérations supplémentaires (soit it = 5) pour obtenir une précision Acc de $4.7 \times 10^{-4}$ en ne calculant Z $(\Delta f)$ que pour 9 valeurs. Pour obtenir la même précision en utilisant uniquement une transformée de Fourier Rapide selon l'algorithme de Rife et Boorstyn, la fonction $Z(\Delta f)$ devrait être calculée pour environ 2048 valeurs, ce résultat étant la puissance de 2 la plus proche du résultat réel.

L'estimation d'erreur $\Delta f(it)$ est ensuite transmise à des moyens d'exponentiation 28 pour calculer l'exponentielle

$$e^{-2\pi j.k \hat{\Delta f}(it)}$$

où k est l'indice de l'échantillon reçu stocké dans la mémoire 26. Les moyens de correction 32 ont pour fonction de corriger l'erreur en fréquence relative au signal stocké dans la mémoire 26. Pour cela, ils reçoivent l'exponentielle

$$e^{-2\pi j.k\hat{\Delta f}(it)}$$

d'une part et le signal $x(k)=c_k \times e^{2\pi j.k\Delta f \times T_s + \varphi_0}$ stocké dans la mémoire 26 d'autre part et effectuent une multiplication entre les deux. Le produit obtenu correspondant au symbole reçu corrigé $c_k$ doit encore subir une correction de phase pour corriger l'erreur de phase entre l'oscillateur à l'émission et celui en réception avant d'être transmis à des moyens de décodage dassiques. Ces dernières étapes ne relevant pas de l'invention elles ne sont pas représentées sur la figure.

Selon une variante de réalisation de l'invention, pour chaque nouveau paquet reçu en provenance d'un terminal donné, la plage $\pm\Delta f_{max}$ est fixée en fonction de l'estimation d'erreur $\Delta f$ obtenue pour les paquets précédents. Cela permet de réduire ou d'augmenter l'intervalle $\pm\Delta f_{max}$ utilisé pour calculer la première itération $it_1$ du calcul de la fonction d'erreur $Z(\Delta f)$ donnant la première estimation d'erreur $\Delta f(1)$ en fonction des performances réelles de l'oscillateur local du terminal. Par exemple, plus l'estimation d'erreur ou erreur résiduelle calculée pour les paquets précédent est faible, c'est-à-dire plus la fréquence reçue est proche de la fréquence théorique, plus la plage $\pm\Delta f_{max}$ pourra être réduite pour le paquet courant.

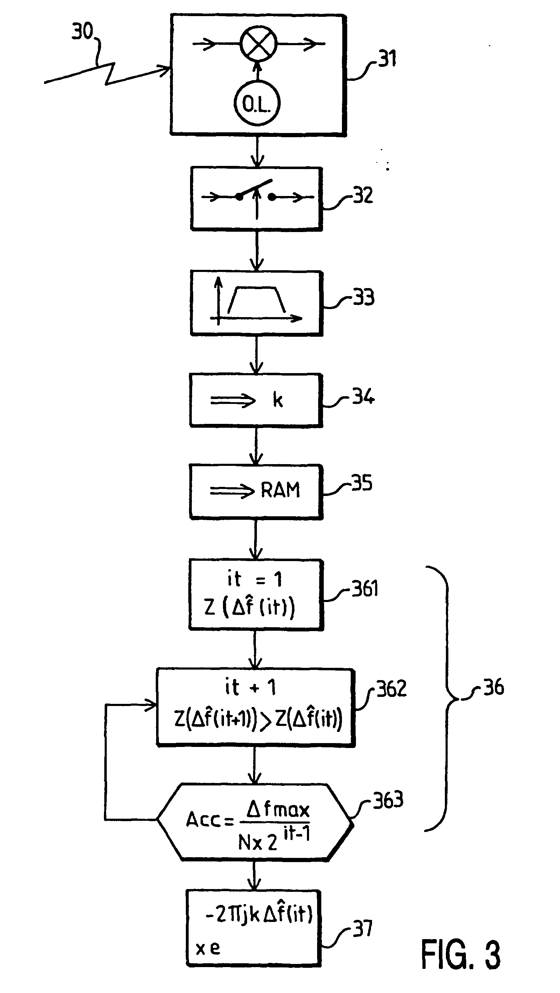

La figure 3 représente les différentes étapes d'un procédé de correction en fréquence à la réception selon l'invention. Ce procédé comporte dans l'ordre les étapes suivantes:

- étape 30 : réception du signal contenant les paquets de données,
- étape 31 : conversion du signal reçu en bande de base,
- étape 32 : sur-échantillonnage du signal en bande de base,
- étape 33 : filtrage passe-bas à l'aide d'un filtre en racine de Nyquist adapté au filtre utilisé à l'émission.
- étape 34 : recherche de l'échantillon optimal et sous-échantillonnage.
- étape 35 : stockage du signal filtré.
- étape 36 : estimation de l'erreur en fréquence $\Delta f$ relative au signal stocké à l'étape 35 : calcul, à partir des données stockées $x(k)$, de la fonction d'erreur discrète $Z(\Delta f)$ définie selon la relation (1), pour en déduire l'erreur en fréquence $\Delta f$ correspondant à un maximum de la fonction d'erreur $Z(\Delta f)$ pour une précision donnée (Acc). L'étape d'estimation d'erreur comporte les sous étapes suivantes :

- étape 361 : première itération ($it_1$) de la fonction d'erreur $Z(\hat{\Delta f})$ sur 2N+1 valeurs comprises dans la plage normalisée $\pm\Delta f_{max}$ pour en déduire une première estimation $\Delta f(1)$ de l'erreur en fréquence $\Delta f$,
- étape 362 : itérations successives ($it_{i+1}$ avec i>0) pour des valeurs comprises entre l'estimation courante $\hat{\Delta f}(i)$, i>0 et une valeur voisine pour laquelle la fonction d'erreur $Z(\hat{\Delta f})$ a la plus forte amplitude,
- étape 363 : comparaison du résultat de chaque itération $it_{i+1}$ à l'estimation courante $\hat{\Delta f}(i)$ pour en déduire une nouvelle estimation $\hat{\Delta f}(i+1)$ jusqu'à atteindre un nombre d'itérations prédéterminé it lié à la précision Acc, par la relation (2).
- étape 37 : correction en fréquence du signal $x(k)$ stocké à l'étape 35 en le multipliant par l'exponentielle

$$e^{-2\pi j.k\hat{\Delta f}(it)}$$

et délivrance d'un signal corrigé en fréquence.

Il est important de noter que l'invention n'implique pas la transmission d'un signal pilote entre l'émetteur et le récepteur et qu'elle s'applique donc à des systèmes de transmission dans lesquels la transmission d'un tel signal pilote n'est pas prévue ou n'est pas possible. Par ailleurs, l'invention est utilisable en combinaison avec des mécanismes de compensation à l'émission à partir de l'estimation faite par le récepteur.

**Revendications**

**1.** Système de transmission par paquets comportant au moins un terminal et une station de tête, la station de tête comportant des moyens de réception pour recevoir des paquets de données transmis par ledit terminal avec une erreur en fréquence et des moyens d'estimation d'erreur pour calculer, à partir de données reçues, une fonction d'erreur discrète $Z(\Delta f)$ et pour en déduire une estimation $\hat{\Delta f}$ de l'erreur en fréquence correspondant à un maximum de la fonction d'erreur $Z(\Delta f)$ pour une précision donnée notée Acc,

**caractérisé en ce que** lesdits moyens d'estimation d'erreur comportent :

- des moyens d'itération pour effectuer :

  • une première itération $it_1$ du calcul de la fonction d'erreur $Z(\hat{\Delta f})$ sur 2N+1 valeurs d'erreur comprises dans une plage fixée $\pm\Delta f_{max}$ dépendant dudit terminal, pour en déduire une première estimation d'erreur $\Delta f$ (1) et
  • des itérations successives $it_{i+1}$, avec i indice d'itération strictement positif, pour des valeurs comprises entre l'estimation courante $\Delta f$ (i) et une valeur voisine pour laquelle la fonction d'erreur $Z(\Delta f)$ a la plus forte amplitude,

- des moyens de comparaison pour comparer le résultat de chaque itération $it_{i+1}$ à l'estimation courante $\hat{\Delta f}$ (i) et pour en déduire une nouvelle estimation $\Delta f$ (i+1) de l'erreur en fréquence jusqu'à atteindre un nombre d'itérations prédéterminé it lié à la précision Acc, par la relation :

$$Acc = \frac{\Delta f_{max}}{N \times 2^{it-1}} \;.$$

2. Système selon la revendication 1, dans lequel pour chaque nouveau paquet reçu en provenance d'un terminal donné, la plage $\pm\Delta f_{max}$ est fixée en fonction de l'estimation d'erreur $\Delta f$ obtenue pour les paquets précédents.

3. Système selon la revendication 1, les paquets de données transmis comportant un préambule de données connues $(c_k)$, **caractérisé en ce que** les moyens d'estimation d'erreur comportent des moyens d'extraction des données x(k) du préambule des paquets reçus et **en ce que** la fonction d'erreur $Z(\Delta f)$ est calculée à partir des données x(k) extraites du préambule.

4. Récepteur pour système de transmission par paquets destiné à recevoir des paquets de données transmis par un terminal avec une erreur en fréquence et comportant des moyens d'estimation d'erreur pour calculer, à partir de données reçues, une fonction d'erreur discrète $Z(\Delta f)$ et pour en déduire une estimation $\Delta f$ de l'erreur en fréquence correspondant à un maximum de la fonction d'erreur $Z(\Delta f)$ pour une précision donnée (Acc),

**caractérisé en ce que** lesdits moyens d'estimation d'erreur comportent :

- des moyens d'itération pour effectuer :

  • une première itération $it_1$ du calcul de la fonction d'erreur $Z(\hat{\Delta f})$ sur 2N+1 valeurs d'erreur comprises dans une plage fixée $\pm\Delta f_{max}$ dépendant dudit terminal, pour en déduire une première estimation d'erreur $\Delta f$ (1) et
  • des itérations successives $it_{i+1}$, avec i indice d'itération strictement positif, pour des valeurs comprises entre l'estimation courante $\Delta f$ (i) et une valeur voisine pour laquelle la fonction d'erreur $Z(\Delta f)$ a la plus forte amplitude,

- des moyens de comparaison pour comparer le résultat de chaque itération $it_{i+1}$ à l'estimation courante $\hat{\Delta f}$ (i) et pour en déduire une nouvelle estimation $\Delta f$ (i+1) jusqu'à atteindre un nombre d'itérations prédéterminé it lié à la précision Acc, par la relation :

$$Acc = \frac{\Delta f_{max}}{N \times 2^{it-1}}$$

5. Récepteur selon la revendication 4, pour chaque nouveau paquet reçu en provenance d'un terminal donné, la plage $\pm\Delta f_{max}$ est fixée en fonction de l'estimation d'erreur $\Delta f$ obtenue pour les paquets précédents.

6. Procédé de correction de fréquence à la réception pour système de transmission par paquets, comportant :

- une étape de réception de paquets de données en provenance d'au moins un terminal dudit système,
- une étape d'estimation d'erreur pour calculer, à partir des données reçues, une fonction d'erreur discrète $Z(\Delta f)$ et pour en déduire une estimation d'erreur en fréquence $\Delta f$ relative aux données reçues correspondant à un maximum de la fonction d'erreur $\hat{Z}(\Delta f)$ pour une précision donnée Acc,

**caractérisé en ce que** l'étape d'estimation d'erreur comporte les sous étapes suivantes :

- une première itération $it_1$ de la fonction d'erreur $\hat{Z}(\Delta f)$ sur 2N+1 valeurs comprises dans une plage fixée $\pm\Delta f_{max}$ dépendante dudit terminal pour en déduire une première estimation $\Delta f$ (1) de l'erreur en fréquence,
- des itérations successives $it_{i+1}$ avec i indice d'itération strictement positif, pour des valeurs comprises entre l'estimation courante $\Delta f$ (i) et une valeur voisine pour laquelle la fonction d'erreur $Z(\Delta f)$ a la plus forte amplitude,
- une étape de comparaison pour comparer le résultat de chaque itération $it_{i+1}$ à l'estimation courante $\Delta f$ (i) et pour en déduire une nouvelle estimation $\Delta f$ (i+1) de l'erreur de fréquence, jusqu'à atteindre un nombre d'itérations prédéterminé it lié à la précision Acc, par la relation :

$$Acc = \frac{\Delta f_{max}}{N \times 2^{it-1}}$$

7. Procédé selon la revendication 6, dans lequel pour chaque nouveau paquet reçu en provenance d'un terminal donné, la plage $\pm\Delta f_{max}$ est fixée en fonction de l'estimation d'erreur $\Delta f$ obtenue pour les paquets précédents.

## Claims

1. A packet transmission system comprising at least a terminal and a head station, the head station comprising means for receiving packets of data transmitted by said terminal with a frequency error, and error estimation means for computing, on the basis of the received data, a discrete error function $Z(\Delta f)$ and for deriving an estimation $\Delta f$ of the frequency error corresponding to a maximum value of the error function $Z(\Delta f)$ for a given accuracy denoted Acc,
    **characterized in that** said error correction means comprise:

    - iteration means for effecting:

        • a first iteration $it_1$ of the computation of the error function $\hat{Z}(\Delta f)$ for 2N+1 error values comprised in a fixed standard range $\pm \Delta f_{max}$ dependent on said terminal for deriving a first frequency error estimation $\Delta f$ (i), and
        • successive iterations $it_{i+1}$, with i being a strictly positive iteration index, for values comprised between the current estimation $\Delta f$ (i) and a neighboring value for which the error function $Z(\Delta f)$ has the largest amplitude,

    - means for comparing the result of each iteration $it_{i+1}$ with the current estimation $\hat{\Delta f}$ (i) and for deriving a new estimation $\Delta f$ (i+1) of the frequency error until a predetermined number of iterations, it, related to the accuracy Acc is obtained as defined by the relation:

$$Acc = \frac{\Delta f_{max}}{N \times 2^{it-1}}.$$

2. A system as claimed in claim 1, wherein for every new packet received from a given terminal, the range $\pm \Delta f_{max}$ is fixed as a function of the error estimation $\Delta f$ obtained for the previous packets.

3. A system as claimed in claim 1, in which the packets of the transmitted data comprise a preamble of known data ($c_k$), **characterized in that** the error estimation means comprise means for extracting data x(k) from the preamble of received packets and **in that** the error function $Z(\Delta f)$ is computed on the basis of the data x(k) extracted from the preamble.

4. A receiver for a packet transmission system intended to receive packets of data transmitted by a terminal with a frequency error and comprising error estimation means for computing, on the basis of the received data, a discrete error function $Z(\Delta f)$ and for deriving an estimation $\Delta f$ of the frequency error corresponding to a maximum value of the error function $Z(\Delta f)$ for a given accuracy (Acc),
    **characterized in that** said error estimation means comprise:

    - iteration means for effecting:

- a first iteration $it_1$ of the computation of the error function $Z(\hat{\Delta f})$ for 2N+1 error values comprised in a fixed standard range $\pm \Delta f_{max}$ dependent on said terminal for deriving a first frequency error estimation $\Delta f$ (i), and
- successive iterations $it_{i+1}$, with i being a strictly positive iteration index, for values comprised between the current estimation $\Delta f$ (i) and a neighboring value for which the error function $Z(\Delta f)$ has the largest amplitude,

- means for comparing the result of each iteration $it_{i+1}$ with the current estimation $\hat{\Delta f}$ (i) and for deriving a new estimation $\Delta f$ (i+1) of the frequency error until a predetermined number of iterations, it, related to the accuracy Acc is obtained as defined by the relation:

$$Acc = \frac{\Delta f_{max}}{N \times 2^{it-1}}.$$

5. A receiver as claimed in claim 4, wherein for every new packet received from a given terminal, the range $\pm \Delta f_{max}$ is fixed as a function of the error estimation $\Delta f$ obtained for the previous packets.

6. A method of frequency correction at the receiver end for a packet transmission system, comprising

- a step of receiving packets of data from at least one terminal of said system,
- an error estimation step for computing, on the basis of the received data, a discrete error function $Z(\hat{\Delta f})$ and for deriving a frequency error estimation $\Delta f$ relative to the data received and corresponding to a maximum value of the error function $Z(\Delta f)$ for a given accuracy Acc,

  **characterized in that** the error estimation step comprises the following sub-steps:

- a first iteration $it_1$ of the error function $Z(\hat{\Delta f})$ for 2N+1 error values comprised in a fixed range $\pm \Delta f_{max}$ dependent on said terminal for deriving a first frequency error estimation $\Delta f$ (1),
- successive iterations $it_{i+1}$, with i being a strictly positive iteration index, for values comprised between the current estimation $\Delta f$ (i) and a neighboring value for which the error function $Z(\Delta f)$ has the largest amplitude,
- a step of comparing the result of each iteration $it_{i+1}$ with the current estimation $\Delta f$ (i) and for deriving a new estimation $\Delta f$ (i+1) of the frequency error until a predetermined number of iterations, it, related to the accuracy Acc is obtained as defined by the relation:

$$Acc = \frac{\Delta f_{max}}{N \times 2^{it-1}} .$$

7. A method as claimed in claim 6, wherein for every new packet received from a given terminal, the range $\pm \Delta f_{max}$ is fixed as a function of the error estimation $\Delta f$ obtained for the previous packets.

**Patentansprüche**

1. Übertragungssystem mit mindestens einem Terminal und einer Hauptstation, wobei die Hauptstation Empfangsmittel für den Erhalt der Datenpakete, von dem besagten Terminal mit einem Frequenzfehler übertragen, und Fehlerbewertungsmittel für die Berechnung, ausgehend von den erhaltenen Daten, einer diskrete Fehlerfunktion $Z(\Delta f)$ und für die Ableitung einer Bewertung $\Delta f$ des Frequenzfehlers entsprechend einem Maximum der Fehlerfunktion $Z(\Delta f)$ für eine bestimmte Präzision bezeichnet Acc enthält,
   **dadurch gekennzeichnet, dass** die besagten Fehlerbewertungsmittel enthalten:

- Iterationsmittel zum Ausführen:

  • einer erste Iteration $it_1$ für die Berechnung der Fehlerfunktion $Z(\hat{\Delta f})$ über 2N+1 Fehlerwerte, enthalten in einem festgelegten Bereich $\pm \Delta f_{max}$, abhängig von dem besagten Terminal, um eine erste Fehlerbewertung $\Delta f$ (1) abzuleiten, und
  • aufeinanderfolgenden Iterationen $it_{i+1}$, mit i strikt positiven Iterationsindizes, für Werte enthalten zwischen der laufenden Bewertung $\Delta f$ (i) und einem benachbarten Wert, für den die Fehlerfunktion $Z(\Delta f)$ die stärkste Amplitude hat,

- Vergleichsmittel für den Vergleich des Ergebnisses jeder Iteration $it_{i+1}$ mit der laufenden Bewertung $\hat{\Delta f}(i)$ und für die Ableitung einer neuen Bewertung $\Delta f(i+1)$ des Frequenzfehlers bis zum Erreichen einer Anzahl vorbestimmter, an die Präzision Acc gebundener Iterationen-it mit der Relation:

$$Acc = \frac{\Delta f_{max}}{Nx2^{it-1}}$$

2. System nach Anspruch 1, in dem für jedes neue von einem bestimmten Terminal erhaltene Paket der Bereich $\pm\Delta f_{max}$ unter Berücksichtigung der Fehlerbewertung festgelegt wird, $\Delta f$ die für die vorhergehenden Pakete erhalten wurde.

3. System nach Anspruch 1, wobei die übertragen Datenpakete ein bekanntes Datenvorwort ($c_k$) enthalten, **dadurch gekennzeichnet, dass** die Fehlerbewertungsmittel Extraktionsmittel für die Daten x(k) des Vorworts der Pakete erhalten und **dadurch**, dass die Fehlerfunktion $Z(\Delta f)$ ausgehend von den aus dem Vorwort extrahierten Daten x(k) berechnet wird.

4. Empfänger für ein Paketübertragungssystem für den Erhalt der von einem Terminal mit einem Frequenzfehler übertragen Datenpakete, wobei dieser Fehlerbewertungsmittel für die Berechnung ausgehend von den erhaltene Daten, einer diskreten Fehlerfunktion $Z(\Delta f)$ und für die Ableitung einer Bewertung $\Delta f$ des Frequenzfehlers entsprechend einem Maximum der Fehlerfunktion $Z(\Delta f)$ für eine bestimmte Präzision (Acc) enthält,
   **dadurch gekennzeichnet, dass** die besagten Fehlerbewertungsmittel enthalten:

   - Iterationsmittel zum Ausführen:

     • einer ersten Iteration $it_1$ zur Berechnung der Fehlerfunktion $\hat{Z}(\Delta f)$ über 2N+1 Fehlerwerte, enthalten in einem festgelegten Bereich $\pm\Delta f_{max}$ abhängig von dem besagten Terminal für die Ableitung einer ersten Fehlerbewertung $\Delta f(1)$ und
     • aufeinanderfolgender Iterationen $it_{i+1}$ mit i strikt positiven Iterationsindizes für Werte enthalten zwischen der laufenden Bewertung $\Delta f(i)$ und einem benachbarten Wert, für den die Fehlerfunktion $Z(\Delta f)$ die stärkste Amplitude hat,

   - Vergleichsmittel für den Vergleich des Ergebnisses jeder Iteration $it_{i+1}$ mit der laufenden Bewertung $\hat{\Delta f}(i)$ und für die Ableitung einer neuen Bewertung $\Delta f(i+1)$ bis zum Erreichen einer Anzahl vorbestimmter, an die Präzision Acc gebundener Iterationen it mit der Relation:

$$Acc = \frac{\Delta f_{max}}{Nx2^{it-1}}$$

5. Empfänger nach Anspruch 4 für jedes neue von einem bestimmten Terminal erhaltene Paket, wobei der Bereich $\pm\Delta f_{max}$ unter Berücksichtigung der Fehlerbewertung $\Delta f$ festgelegt wird, die für die vorhergehenden Pakete erhalten wurde.

6. Korrekturverfahren der Frequenz beim Empfang für ein Paketübertragungssystem mit:

   - einem Schritt für den Empfang von Datenpaketen aus mindestens einem Terminal des besagten Systems,
   - einem Schritt zur Fehlerbewertung für die Berechnung, ausgehend von den erhaltenen Daten, einer diskreten Fehlerfunktion $Z(\Delta f)$ und für die Ableitung einer Frequenzfehlerbewertung $\Delta f$ in Bezug auf die erhaltenen Daten entsprechend einem Maximum der Fehlerfunktion $Z(\Delta f)$ für eine bestimmte Präzision Acc,

   **dadurch gekennzeichnet, dass** der Schritt zur Fehlerbewertung folgende Unterschritte enthält:

   - eine erste Iteration $it_1$ der Fehlerfunktion $\hat{Z}(\Delta f)$ über 2N+1 Werte, enthalten in einem festgelegten Bereich $\pm\Delta f_{max}$, abhängig von dem besagten Terminal für die Ableitung einer ersten Bewertung $\Delta f(1)$ des Frequenzfehlers,
   - aufeinanderfolgende Iterationen $it_{i+1}$ mit i strikt positiven Iterationsindizes für Werte enthalten zwischen der laufenden Bewertung $\Delta f(i)$ und einem benachbarten Wert, für den die Fehlerfunktion $Z(\Delta f)$ die stärkste Am-

plitude hat,

- einen Vergleichsschritt für den Vergleich des Ergebnisses jeder Iteration $it_{i+1}$ mit der laufenden Bewertung $\Delta \hat{f}$ (i) und für die Ableitung einer neuen Bewertung $\Delta f$ (i+1) des Frequenzfehlers bis zum Erreichen einer Anzahl vorbestimmter, an die Präzision Acc gebundener Iterationen it mit der Relation:

$$Acc = \frac{\Delta f_{max}}{Nx2^{it-1}}$$

7. Verfahren nach Anspruch 6, in dem für jedes neue erhaltene Paket aus einem bestimmten Terminal der Bereich $\pm \Delta f_{max}$ unter Berücksichtigung der Fehlerbewertung $\Delta \hat{f}$ festgelegt wird, die für die vorhergehenden Pakete erhalten wurde.

FIG. 1

FIG. 2

30

31

O.L.

32

33

34 ⟹ k

35 ⟹ RAM

361
$$it = 1$$
$$Z(\Delta \hat{f}(it))$$

362
$$it + 1$$
$$Z(\Delta \hat{f}(it+1)) > Z(\Delta \hat{f}(it))$$

36

363
$$Acc = \frac{\Delta f max}{N \times 2^{it-1}}$$

37
$$-2\pi jk \Delta \hat{f}(it)$$
$$\times e$$

FIG. 3